# FASCICULE DE BREVET EUROPEEN

(11) **EP 1 211 148 B1**
(45) Date de publication et mention de la délivrance du brevet: **14.04.2004**
(21) Numéro de dépôt: 01127924.7
(22) Date de dépôt: 23.11.2001
(51) Int. Cl.: B60R 25/04, H01H 3/58, G05G 1/08

(54) **Dispositif de commande et antivol pour véhicule automobile comprenant ce dispositif de commande**
Betätigungsvorrichtung und Diebstahlsicherung für Kraftfahrzeuge mit solcher Betätigungsvorrichtung
Control device and anti-theft system for a motor vehicle having said control device

(30) Priorité: 29.11.2000 FR 0015436
(43) Date de publication de la demande: 05.06.2002
(73) Titulaire: VALEO SECURITE HABITACLE S.A.S., 94042 Créteil Cédex (FR)
(72) Inventeur: Canard, Louis, 58000 Nevers (FR)
(74) Mandataire: Hervouet, Sylvie

(56) Documents cités:
- EP-A- 0 768 220
- DE-A- 4 016 779
- DE-A- 4 307 339

## Description

La présente invention concerne un dispositif de commande selon le préambule de la revendication 1, comme connue par DE-A-4016779.

On connait aussi déjà dans l'état de la technique, notamment d'après WO 99/14085, un dispositif de commande du type comprenant un bouton de commande, déplaçable en rotation par rapport à un support fixe, couplé en rotation à une tige de commande sensiblement coaxiale à l'axe de rotation du bouton de commande.

Le dispositif de commande est utilisé notamment, comme proposé dans WO 99/14085, dans un antivol de véhicule automobile de type électronique. Un antivol de ce type comprend généralement un dispositif électronique d'identification constitué notamment d'un identifiant électronique, porté par un utilisateur du véhicule autorisé, et d'une unité d'identification de cet utilisateur autorisé, embarquée à bord du véhicule.

Dans l'antivol électronique décrit dans WO 99/14085, le bouton de commande forme un organe de commande manuelle du démarrage d'un moteur du véhicule et du verrouillage d'une colonne de direction du véhicule. Le bouton de commande est solidaire en rotation de la tige de commande, cette dernière étant destinée à actionner un commutateur à plusieurs positions. Ainsi, le bouton de commande peut être placé, conjointement avec la tige de commande, successivement dans une première position angulaire extrême de repos, dite position "STOP", une position "ACCESSOIRES", une position "CONTACT" et une seconde position angulaire extrême, opposée à la première, dite position "DEMARRAGE".

Tant qu'un utilisateur autorisé n'est pas identifié, la rotation du bouton de commande est interdite par des moyens de blocage appropriés agissant sur la tige ou le bouton de commande.

L'invention a notamment pour but d'éviter qu'un antivol électronique soit endommagé lors de la rotation forcée du bouton de commande par une personne non autorisée, ceci en optimisant le caractère inviolable de l'antivol, d'une manière simple.

A cet effet, l'invention a pour objet un dispositif de commande selon la revendication 1. Selon des modes de réalisation préfèrés :
- les moyens de clavetage comprennent une bague élastique de contour ouvert, entourant au moins partiellement l'organe de couplage femelle, comprenant une extrémité recourbée radialement vers l'intérieur de la bague formant une clavette destinée à être emboîtée dans des trous de clavetage, sensiblement alignés radialement, ménagés dans les organes mâle et femelle, la clavette étant déplaçable radialement par déformation élastique de la bague entre une position d'emboîtement dans le trou de clavetage de l'organe de couplage mâle et une position de déboîtement de ce trou de clavetage de l'organe de couplage mâle ;
- le trou de clavetage de l'organe de couplage mâle est délimité par une rampe sollicitant la clavette vers sa position de déboîtement sous l'effet du dépassement du couple relatif prédéterminé entre le bouton de commande et la tige de commande ;
- les organes de couplage mâle et femelle comprennent des moyens complémentaires d'immobilisation axiale entre eux ;
- l'organe de couplage femelle et la bague comprennent des moyens complémentaires d'immobilisation en rotation entre eux et des moyens complémentaires d'immobilisation en translation entre eux ;
- la bague est logée dans un dégagement périphérique de l'organe de couplage femelle, les moyens complémentaires d'immobilisation en rotation comprenant un méplat, délimitant au moins partiellement ce dégagement périphérique, destiné à coopérer avec une partie plane complémentaire de la bague ;
- les moyens complémentaires d'immobilisation en translation comprennent une languette radiale, solidaire de la partie plane de la bague, destinée à être emboîtée dans une fente transversale complémentaire ménagée dans le méplat périphérique de l'organe de couplage femelle ;
- les moyens complémentaires d'immobilisation axiale des organes de couplage mâle et femelle comprennent une rainure annulaire périphérique ménagée dans l'organe mâle destinée à coopérer par emboîtement avec la languette traversant la fente ;
- l'organe de couplage femelle est monté rotatif dans un alésage du support fixe comportant un dégagement interne d'autorisation du déboîtement de la clavette dans la position angulaire prédéterminée du bouton de commande par rapport au support fixe ;
- la clavette est reliée au reste de la bague par une partie de jonction destinée à coopérer, lorsque le bouton de commande n'est pas dans sa position angulaire prédéterminée, avec la surface délimitant l'alésage du support fixe pour interdire le déboîtement de la clavette du trou de clavetage ménagé dans l'organe de couplage mâle.

L'invention a également pour objet un antivol pour véhicule automobile, caractérisé en ce qu'il comprend un dispositif de commande tel que défini ci-dessus, le bouton de commande formant un organe de commande manuelle du démarrage d'un moteur du véhicule et du verrouillage d'une colonne de direction du véhicule.

Suivant une autre caractéristique de cet antivol, la tige de commande est destinée à actionner un commutateur à plusieurs positions, la position angulaire prédéterminée du bouton de commande correspondant à une position angulaire extrême de ce bouton appelée position « stop ».

L'invention sera mieux comprise à la lecture de la description qui va suivre, donnée uniquement à titre d'exemple et faite en se référant aux dessins dans lesquels :
- la figure 1 est une vue en perspective éclatée d'un dispositif de commande selon l'invention;
- la figure 2 est une vue en coupe axiale du dispositif de commande représenté sur la figure 1
- les figures 3 à 5 sont des vues en coupe suivant la ligne 3-3 de la figure 2, montrant les moyens de couplage des bouton et tige de commande dans différentes configurations d'utilisation ;
- la figure 6 est une vue de détail de la partie cerclée 6 de la figure 3.

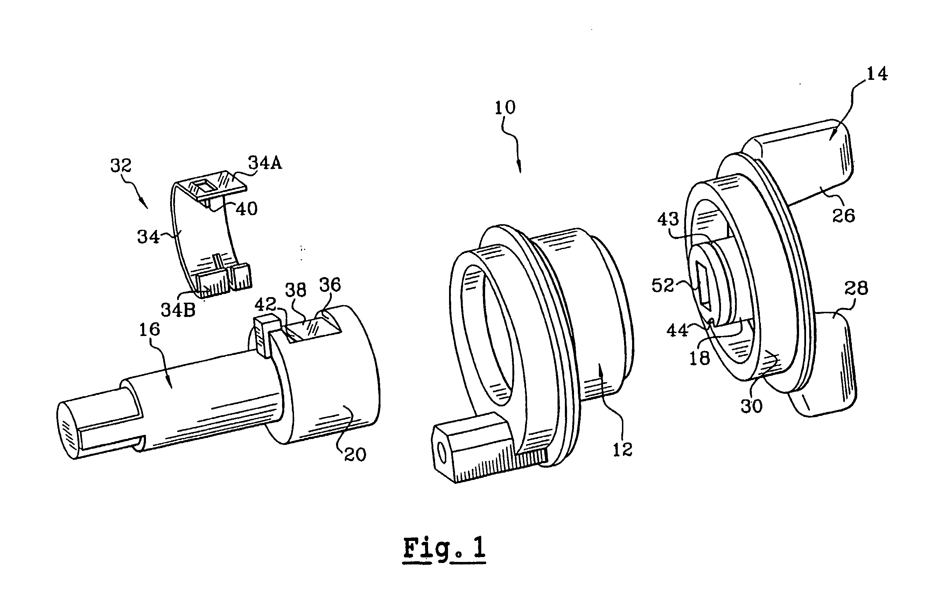

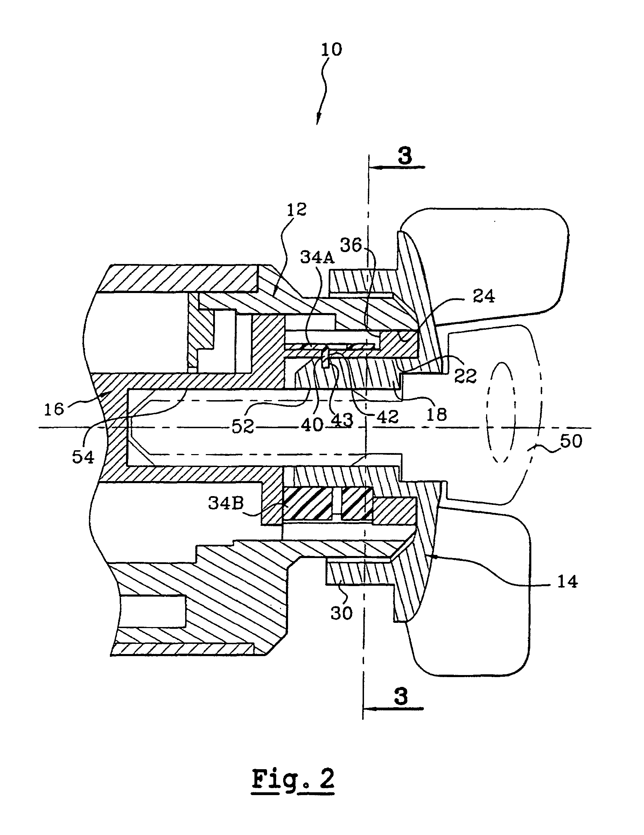

On a représenté sur les figures 1 et 2 un dispositif de commande selon l'invention, désigné par la référence générale 10. Dans l'exemple décrit, le dispositif 10 est destiné à équiper un antivol de type électronique pour véhicule automobile.

De façon classique, le dispositif de commande 10 comprend un support fixe 12, de forme générale annulaire, et un bouton de commande 14, déplaçable en rotation par rapport à ce support fixe 12.

Le bouton de commande 14 est couplé en rotation à une tige de commande 16 sensiblement coaxiale à l'axe de rotation de ce bouton 14.

Dans l'exemple décrit, le bouton de commande 14 forme un organe de commande manuelle du démarrage d'un moteur du véhicule et du verrouillage d'une colonne de direction de ce véhicule.

La tige de commande 16 est destinée à actionner un commutateur classique à plusieurs positions (non représenté). Le bouton de commande 14 peut être placé dans une première position angulaire extrême de repos, dite position «stop», une position «accessoires», une position «contact», et une seconde position angulaire extrême, opposée à la première position, dite position «démarrage».

Le bouton de commande 14 est couplé à la tige de commande 16 à l'aide de moyens de couplage qui seront décrits ci-dessous.

Ces moyens de couplage sont débrayables sous l'effet du dépassement d'un couple relatif prédéterminé entre le bouton de commande 14 et la tige de commande 16.

Les moyens de couplage comprennent des organes complémentaires mâle 18 et femelle 20 de formes générales cylindriques sensiblement coaxiales à l'axe de rotation du bouton de commande 14.

L'organe de couplage mâle 18, venu de matière avec le bouton de commande 14, est monté rotatif dans un alésage 22 ménagé dans l'organe femelle 20, venu de matière avec la tige de commande 16. L'organe de couplage femelle 20 est monté rotatif dans un alésage 24 ménagé dans le support fixe 12.

On notera que le bouton de commande 14 comporte deux ailettes 26,28 de préhension et une jupe 30 entourant partiellement le support fixe 12.

Les moyens de couplage du bouton de commande 14 et de la tige de commande 16 comprennent également des moyens de clavetage des organes mâle 18 et femelle 20 libérables par déformation élastique de façon que ces moyens de couplage soient débrayables sous l'effet du dépassement d'un couple relatif prédéterminé entre le bouton 14 et la tige 16.

Les moyens de clavetage 32 comprennent, de préférence, une bague élastique 34 de contour ouvert, fabriquée par exemple en acier à ressort. Cette bague 34, entourant au moins partiellement l'organe de couplage femelle 20, est logée dans un dégagement périphérique 36 de cet organe femelle 20.

Un méplat 38, délimitant partiellement le dégagement périphérique 36, est destiné à coopérer avec une première extrémité complémentaire plane 34A de la bague pour immobiliser cette dernière en rotation par rapport à l'organe de couplage femelle 20.

Une languette radiale 40, solidaire de la première extrémité 34A de la bague, est destinée à être emboîtée dans une fente transversale complémentaire 42, ménagée dans le méplat périphérique 38, pour immobiliser longitudinalement en translation la bague 34 par rapport à l'organe de couplage femelle 20.

En considérant la figure 2, on voit que la languette 40, traversant la fente 42, coopère également par emboîtement avec une rainure annulaire périphérique 43 de l'organe mâle 18 pour immobiliser axialement les organes de couplage mâle 18 et femelle 20 entre eux. Les languette 40 et rainure 43 permettent d'immobiliser axialement le bouton de commande 14 par rapport à la tige de commande 16 tout en autorisant la rotation de ce bouton 14.

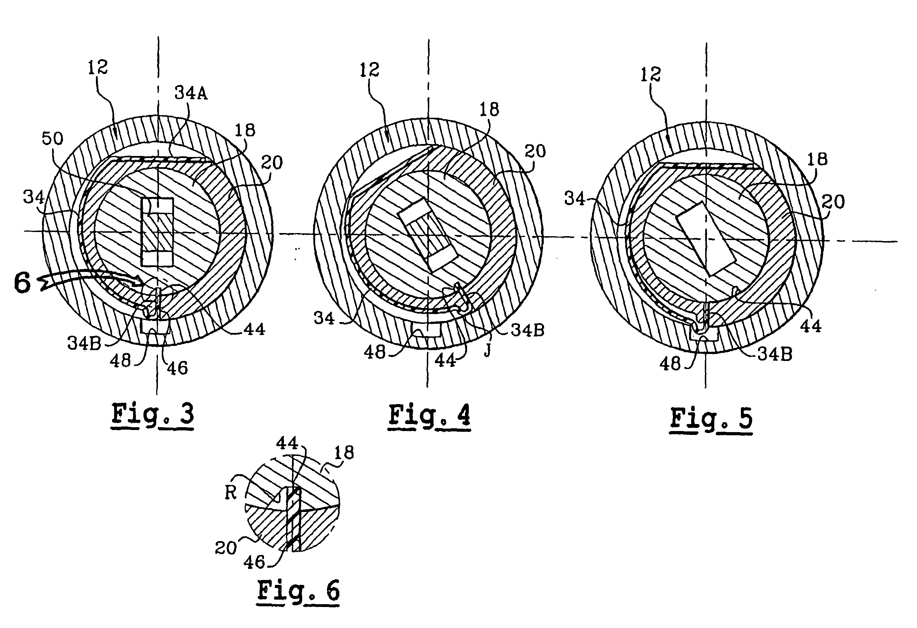

La bague 34 comprend une seconde extrémité 34B, recourbée radialement vers l'intérieur de cette bague 34, formant une clavette destinée à être emboîtée dans des trous 44,46 de clavetage, sensiblement alignés radialement, ménagés dans les organes mâle 18 et femelle 20 (voir figures 3 à 6).

La clavette 34B est déplaçable radialement par déformation élastique de la bague 34 entre une position d'emboîtement dans le trou de clavetage 44 de l'organe de couplage mâle 18 (voir figure 3) et une position de déboîtement de ce trou 44 (voir figure 5).

On notera que le trou de clavetage 44 de l'organe de couplage mâle 18 est délimité par une rampe R (voir figure 6) sollicitant la clavette 34B vers sa position de déboîtement sous l'effet du dépassement du couple relatif prédéterminé entre le bouton de commande 14 et la tige de commande 16.

On notera également, en se référant notamment aux figures 3 à 5, que l'alésage 24 du support fixe 12, dans lequel l'organe de couplage femelle 20 est monté rotatif, comporte un dégagement interne 48 d'autorisation du déboîtement de la clavette 34B dans une position angulaire prédéterminée du bouton de commande 14 par rapport à ce support fixe 12. Cette position angulaire prédéterminée correspond à la position «stop» du bouton 14.

Dans l'exemple décrit, l'antivol comprend un dispositif électronique classique d'identification, non représenté, constitué notamment d'un identifiant électronique, destiné à être porté par un utilisateur du véhicule autorisé, et d'une unité d'identification de cet utilisateur autorisé, embarquée à bord du véhicule.

L'identifiant électronique est constitué, par exemple, par un badge. Le cas échéant, le dispositif électronique d'identification comprend également une clé 50 formant un identifiant de secours en cas de panne du badge. Des informations sont susceptibles d'être échangées entre la clé 50 et l'unité d'identification à l'aide des moyens classiques à transpondeur agencés dans cette clé 50 et l'antivol.

En se référant notamment à la figure 2, on voit que la clé de secours 50 est destinée à être logée dans des perçages alignés 52,54 ménagés dans le bouton de commande 14 et la tige de commande 16.

L'antivol comprend également des moyens classiques de blocage en rotation de la tige de commande 16 (non représentés) destinés à interdire la rotation de cette tige 16 tant qu'un utilisateur autorisé n'est pas identifié.

On décrira ci-dessous les principaux aspects du fonctionnement du dispositif de commande 10 décrit ci-dessus, liés à l'invention.

Initialement, le bouton de commande 14 est dans la position «stop» illustrée sur la figure 3. La clé de secours 50 est éventuellement logée dans le bouton de commande 14 et la tige de commande 16.

La clavette 34B est emboîtée dans les trous de clavetage 44,46, si bien que les organes de couplage mâle 18 et femelle 20 sont solidaires en rotation l'un de l'autre.

Conformément à un fonctionnement classique de l'antivol électronique, dès qu'un utilisateur autorisé est identifié, les moyens de blocage en rotation de la tige de commande 16 sont libérés de façon à permettre la libre rotation de cette tige 16.

L'utilisateur peut alors tourner le bouton de commande 14, qui est entraîné en rotation, conjointement avec la tige de commande 16, comme cela est représenté sur la figure 4.

On notera, en considérant cette figure 4, que la clavette 34B est reliée au reste de la bague 34 par une partie de jonction J destinée à coopérer, lorsque le bouton 14 n'est pas dans sa position «stop», avec la surface délimitant l'alésage 24 du support fixe 12 pour interdire le déboîtement de la clavette 34B du trou de clavetage 44 ménagé dans l'organe mâle 18.

Si, lorsque le bouton de commande 14 est dans sa position «stop», aucun utilisateur autorisé n'est identifié par l'unité d'identification, la rotation de la tige de commande 16 est interdite par les moyens de blocage classiques de l'antivol. Dans ce cas, l'utilisateur fraudeur entraînant le bouton de commande 14 en rotation provoque l'apparition d'un couple entre ce bouton de commande 14 et la tige de commande 16 (maintenue fixe par les moyens de blocage).

Ce couple a pour effet, lorsqu'il dépasse une valeur prédéterminée qui est fonction de l'élasticité de la bague 34, de déboîter la clavette 34B du trou de clavetage 44 par coopération de la rampe R avec cette clavette 34B.

Le déboîtement de la clavette 34B est autorisé par le dégagement 48 ménagé dans l'alésage 24 du support 10. Le bouton de commande 14 peut alors se déplacer librement en rotation indépendamment de la tige de commande 16, comme cela est représenté sur la figure 5.

Pour provoquer à nouveau la solidarisation en rotation du bouton 14 et de la tige 16 de commande, il suffit de replacer ce bouton de commande 14 dans la position «stop» dans laquelle la clavette 34B est rappelée élastiquement en position d'emboîtement dans le trou de couplage 44 ménagé dans l'organe mâle 18.

Parmi les avantages de l'invention, on notera que celle-ci permet d'éviter que le dispositif de commande soit endommagé lors de la rotation forcée du bouton de commande, notamment par un utilisateur non autorisé, du fait que les moyens de couplage de ce bouton avec la tige de commande sont automatiquement débrayés lors du dépassement d'un couple relatif prédéterminé entre le bouton et la tige de commande.

Par ailleurs, à la suite du débrayage des moyens de couplage, le bouton de commande peut être à nouveau automatiquement couplé à la tige de commande en replaçant ce bouton dans sa position «stop».

## Revendications

1. Dispositif de commande du type comprenant un bouton de commande (14), déplaçable en rotation par rapport à un support fixe (12), couplé en rotation à une tige de commande (16) sensiblement coaxiale à l'axe de rotation du bouton de commande (14) à l'aide de moyens de couplage (18, 20, 32) débrayables sous l'effet du dépassement d'un couple relatif prédéterminé entre le bouton de commande (14) et la tige de commande (16), les moyens de couplage comprenant aussi:
- des organes complémentaires mâle (18) et femelle (20), portés par le bouton de commande (14) et la tige de commande (16), ces organes de couplage (18, 20) ayant des formes générales cylindriques sensiblement coaxiales à l'axe de rotation du bouton de commande (14), et
- des moyens (32) de clavetage des organes mâle (18) et femelle (20) libérables par déformation élastique,
**caractérisé en ce que** les moyens (32) de clavetage sont des moyens de clavetage radial et que les organes mâle (18) et femelle (20) sont libérables radialement.

2. Dispositif selon la revendication 1, **caractérisé en ce que** les moyens de couplage (18, 20, 32) sont débrayables uniquement lorsque le bouton de commande (14) est dans une position angulaire prédéterminée par rapport au support fixe (12).

3. Dispositif selon la revendication 1 ou 2, **caractérisé en ce que** les organes de couplage mâle (18) et femelle (20) comprennent des moyens complémentaires (40, 43) d'immobilisation axiale entre eux.

4. Dispositif selon l'une quelconque des revendications 1 à 3, **caractérisé en ce que** les moyens de clavetage (32) comprennent une bague élastique (34) de contour ouvert, entourant au moins partiellement l'organe de couplage femelle (20), comprenant une extrémité recourbée radialement vers l'intérieur de la bague (34) formant une clavette (34B) destinée à être emboîtée dans des trous de clavetage (44, 46), sensiblement alignés radialement, ménagés dans les organes mâle (18) et femelle (20), la clavette (34B) étant déplaçable radialement par déformation élastique de la bague (34) entre une position d'emboîtement dans le trou de clavetage (44) de l'organe de couplage mâle (18) et une position de déboîtement de ce trou de clavetage (44) de l'organe de couplage mâle (18).

5. Dispositif selon la revendication 4, **caractérisé en ce que** le trou de clavetage (44) de l'organe de couplage mâle (18) est délimité par une rampe (R) sollicitant la clavette (34B) vers sa position de déboîtement sous l'effet du dépassement du couple relatif prédéterminé entre le bouton de commande (14) et la tige de commande (16).

6. Dispositif selon la revendication 4 ou 5, **caractérisé en ce que** l'organe de couplage femelle (20) et la bague (34) comprennent des moyens complémentaires (38, 34A) d'immobilisation en rotation entre eux et des moyens complémentaires (42, 40) d'immobilisation en translation entre eux.

7. Dispositif selon la revendication 6, **caractérisé en ce que** la bague (34) est logée dans un dégagement périphérique (36) de l'organe de couplage femelle (20), les moyens complémentaires d'immobilisation en rotation comprenant un méplat (38), délimitant au moins partiellement ce dégagement périphérique (36), destiné à coopérer avec une partie plane complémentaire (34A) de la bague (34).

8. Dispositif selon les revendications 6 et 7 prises ensemble, **caractérisé en ce que** les moyens complémentaires d'immobilisation en translation comprennent une languette radiale (40), solidaire de la partie plane de la bague (34), destinée à être emboîtée dans une fente transversale complémentaire (42) ménagée dans le méplat périphérique (38) de l'organe de couplage femelle (20).

9. Dispositif selon la revendication 3 prise en combinaison avec la revendication 8, **caractérisé en ce que** les moyens complémentaires d'immobilisation axiale des organes de couplage mâle (18) et femelle (20) comprennent une rainure annulaire périphérique (43) ménagée dans l'organe mâle (18) destinée à coopérer par emboîtement avec la languette (40) traversant la fente (42).

10. Dispositif selon la revendication 2 prise en combinaison avec l'une quelconque des revendications 3 à 9, **caractérisé en ce que** l'organe de couplage femelle (20) est monté rotatif dans un alésage (24) du support fixe (12) comportant un dégagement interne (48) d'autorisation du déboîtement de la clavette (34B) dans la position angulaire prédéterminée du bouton de commande (14) par rapport au support fixe (12).

11. Dispositif selon l'une quelconque des revendications 4 à 9 prise en combinaison avec la revendication 10, **caractérisé en ce que** la clavette (34B) est reliée au reste de la bague (34) par une partie de jonction (J) destinée à coopérer, lorsque le bouton de commande (14) n'est pas dans sa position angulaire prédéterminée, avec la surface délimitant l'alésage (24) du support fixe (12) pour interdire le déboîtement de la clavette (34B) du trou de clavetage (44) ménagé dans l'organe de couplage mâle (18).

12. Antivol pour véhicule automobile, **caractérisé en ce qu'**il comprend un dispositif de commande selon l'une quelconque des revendications 1 à 11, le bouton de commande (14) formant un organe de commande manuelle du démarrage d'un moteur du véhicule et du verrouillage d'une colonne de direction du véhicule.

13. Antivol selon la revendication 12 comprenant un dispositif de commande selon la revendication 2, **caractérisé en ce que** la tige de commande (16) est destinée à actionner un commutateur à plusieurs positions, la position angulaire prédéterminée du bouton de commande (14) correspondant à une position angulaire extrême de ce bouton appelée position « stop ».

## Patentansprüche

1. Betätigungsvorrichtung vom Typ mit einem Betätigungsknopf (14), der gegenüber einem festen Träger (12) drehbar und mit einer im wesentlichen koaxial zur Drehachse des Betätigungsknopfs (14) verlaufenden Betätigungsstange (16) mit Hilfe von Kopplungsmitteln (18, 20, 32) drehfest gekoppelt ist, die unter der Wirkung des Überschreitens eines vorbestimmten Relativmoments zwischen Betätigungsknopf (14) und Betätigungsstange (16) lösbar sind, wobei die Kopplungsmittel ferner enthalten:
- komplementäre Glieder, nämlich ein Einsteckglied (18) und ein Aufnahmeglied (20), die vom Betätigungsknopf (14) und der Betätigungsstange (16) getragen werden, wobei diese Kopplungsmittel (18, 20) allgemein Zylinderformen haben, die im wesentlichen koaxial zur Drehachse des Betätigungsknopfs (14) verlaufen, und
- Mittel (32) zum Verkeilen des Einsteckglieds (18) und des Aufnahmeglieds (20), die durch elastische Verformung lösbar sind,
**dadurch gekennzeichnet, dass** die Verkeilmittel (32) Mittel zum radialen Verkeilen sind und dass das Einsteckglied (18) und das Aufnahmeglied (20) radial lösbar sind.

2. Vorrichtung nach Anspruch 1, **dadurch gekennzeichnet, dass** die Kopplungsmittel (18, 20, 32) nur dann lösbar sind, wenn der Betätigungsknopf (14) sich in einer vorbestimmten Winkelstellung bezüglich des festen Trägers (12) befindet.

3. Vorrichtung nach Anspruch 1 oder 2, **dadurch gekennzeichnet, dass** das Kopplungseinsteckglied (18) und das Kopplungsaufnahmeglied (20) komplementäre Mittel (40, 43) zum gegenseitigen axialen Festlegen enthalten.

4. Vorrichtung nach einem der Ansprüche 1 bis 3, **dadurch gekennzeichnet, dass** die Verkeilmittel (32) einen Federring (34) mit offener Kontur enthalten, der zumindest teilweise das Kopplungsaufnahmeglied (20) umgibt und ein radial nach innerhalb des Rings (34) umgebogenes Ende aufweist, das einen Keil (34B) bildet, der dazu bestimmt ist, in Verkeillöcher (44, 46) einzugreifen, die im wesentlichen radial fluchten und im Einsteckglied (18) und im Aufnahmeglied (20) ausgebildet sind, wobei der Keil (34B) durch elastische Verformung des Rings (34) zwischen einer Stellung zum Eingreifen in das Verkeilloch (44) des Kopplungseinsteckglieds (18) und einer Stellung zum Freikommen aus diesem Verkeilloch (44) des Kopplungseinsteckglieds (18) radial verlagerbar ist.

5. Vorrichtung nach Anspruch 4, **dadurch gekennzeichnet, dass** das Verkeilloch (44) des Kopplungseinsteckglieds (18) von einer Rampe (R) begrenzt wird, welche unter der Wirkung des Überschreitens des vorbestimmten Relativmoments zwischen Betätigungsknopf (14) und Betätigungsstange (16) den Keil (34B) in seine Freigabestellung beaufschlagt.

6. Vorrichtung nach Anspruch 4 oder 5, **dadurch gekennzeichnet, dass** das Kopplungsaufnahmeglied (20) und der Ring (34) komplementäre Mittel (38, 34A) zum gegenseitigen drehfesten Festlegen und komplementäre Mittel (42, 40) zum gegenseitigen verschiebefesten Festlegen enthalten.

7. Vorrichtung nach Anspruch 6, **dadurch gekennzeichnet, dass** der Ring (34) in einer Umfangsausnehmung (36) des Kopplungsaufnahmeglieds (20) aufgenommen ist, wobei die komplementären Mittel zum drehfesten Festlegen eine Abflachung (38) enthalten, die diese Umfangsausnehmung (36) zumindest teilweise begrenzt und dazu bestimmt ist, mit einem komplementären Flachteil (34A) des Rings (34) zusammenzuwirken.

8. Vorrichtung nach Anspruch 6 und 7 in Kombination, **dadurch gekennzeichnet, dass** die komplementären Mittel zum verschiebefesten Festlegen eine radiale Zunge (40) enthalten, die fest mit dem Flachteil des Rings (34) verbunden und dazu bestimmt ist, in einen komplementären Querspalt (42) einzugreifen, der in der Umfangsabflachung (38) des Kopplungsaufnahmeglieds (20) ausgebildet ist.

9. Vorrichtung nach Anspruch 3 in Kombination mit Anspruch 8, **dadurch gekennzeichnet, dass** die komplementären Mittel zum axialen Festlegen des Kopplungseinsteckglieds (18) und des Kopplungsaufnahmeglieds (20) eine ringförmige Umfangsrille (43) aufweisen, die im Einsteckglied (18) ausgebildet und dazu bestimmt ist, durch Eingreifen mit der den Spalt (42) durchsetzenden Zunge (40) zusammenzuwirken.

10. Vorrichtung nach Anspruch 2 in Kombination mit einem der Ansprüche 3 bis 9, **dadurch gekennzeichnet, dass** das Kopplungsaufnahmeglied (20) drehbar in einer Bohrung (24) des festen Trägers (12) gelagert ist, die eine innere Ausnehmung (48) enthält, um das Freikommen des Keils (34B) in der vorbestimmten Winkelstellung des Betätigungsknopfs (14) bezüglich des festen Trägers (12) zu gestatten.

11. Vorrichtung nach einem der Ansprüche 4 bis 9 in Kombination mit Anspruch 10, **dadurch gekennzeichnet, dass** der Keil (34B) mit dem restlichen Ring (34) über ein Verbindungsteil (J) verbunden ist, das dazu bestimmt ist, mit der die Bohrung (24) des festen Trägers (12) begrenzenden Fläche dann zusammenzuwirken, wenn der Betätigungsknopf (14) sich nicht in seiner vorbestimmten Winkelstellung befindet, um das Freikommen des Keils (34B) aus dem Verkeilloch (44) zu unterbinden, das im Kopplungseinsteckglied (18) ausgebildet ist.

12. Diebstahlsicherung für Kraftfahrzeuge, **dadurch gekennzeichnet, dass** sie eine Betätigungsvorrichtung nach einem der Ansprüche 1 bis 11 enthält, wobei der Betätigungsknopf (14) ein Glied zum manuellen Steuern des Startvorgangs eines Fahrzeugmotors und der Verriegelung einer Lenksäule des Fahrzeugs bildet.

13. Diebstahlsicherung nach Anspruch 12, mit einer Betätigungsvorrichtung nach Anspruch 2, **dadurch gekennzeichnet, dass** die Betätigungsstange (16) dazu bestimmt ist, einen Mehrstellungsschalter zu betätigen, wobei die vorbestimmte Winkelstellung des Betätigungsknopfs (14) einer "Stopp-Stellung" genannten Winkelendstellung dieses Knopfs entspricht.

## Claims

1. Control device of the type comprising a control knob (14) which can be displaced in rotation relative to a fixed support (12), and is coupled in rotation with a control rod (16) which is substantially coaxial to the axis of rotation of the control knob (14), by coupling means (18,20,32) which can be disengaged under the effect of exceeding of a predetermined relative torque between the control knob (14) and the control rod (16), the coupling means also comprising:
- complementary male (18) and female (20) units supported by the control knob (14) and the control rod (16), these coupling units (18,20) having substantially generally cylindrical forms coaxial to the axis of rotation of the control knob (14); and
- means (32) for wedging of the male (18) and female (20) units which can be released by resilient deformation, the means (32) for wedging are radial wedging means and the male (18) and female (20) units can be released radially.

2. Device according to claim 1, **characterised in that** the coupling means (18,20,32) can be disengaged only when the control knob (14) is in a predetermined angular position relative to the fixed support (12).

3. Device according to claim 1 or claim 2, **characterised in that** the male (18) and female (20) coupling units comprise complementary means (40,43) for axial immobilisation relative to one another.

4. Device according to any one of claims 1 to 3, **characterised in that** the means (32) for wedging comprise a resilient ring (34) with an open contour, which surrounds the female coupling unit (20) at least partially, comprising an end which is curved radially towards the interior of the ring (34) and forms a wedge (34B) which is designed to be fitted in wedging holes (44,46), which are aligned substantially radially and are provided in the male (18) and female (20) units, the wedge (34B) being able to be displaced radially by resilient deformation of the ring (34), between a position in which it is fitted in the wedging hole (44) in the male coupling unit (18), and a position of release from this wedging hole (44) in the male coupling unit (18).

5. Device according to claim 4, **characterised in that** the wedging hole (44) in the male coupling unit (18) is delimited by a ramp (R) which thrusts the wedge (34B) towards its position of release, under the effect of exceeding of the predetermined relative torque between the control knob (14) and the control rod (16).

6. Device according to claim 4 or claim 5, **characterised in that** the female coupling unit (20) and the ring (34) comprise complementary means (38,34A) for immobilisation in rotation relative to one another and complementary means (42,40) for immobilisation in translation relative to one another.

7. Device according to claim 6, **characterised in that** the ring (34) is accommodated in a peripheral undercut (36) in the female coupling unit (20), the complementary means for immobilisation in rotation comprising a flattened part (38), which delimits this peripheral undercut (36) at least partially, and is designed to co-operate with a complementary flat part (34A) of the ring (34).

8. Device according to claims 6 and 7 taken together, **characterised in that** the complementary means for immobilisation in translation comprise a radial tongue (40) which is integral with the flat part of the ring (34), and is designed to be fitted in a complementary transverse slot (42) provided in the peripheral flattened part (38) of the female coupling unit (20).

9. Device according to claim 3 taken in combination with claim 8, **characterised in that** the complementary means for axial immobilisation of the male (18) and female (20) coupling units comprise a peripheral annular groove (43) provided in the male unit (18), which groove is designed to co-operate by being fitted together with the tongue (40) which passes through the slot (42).

10. Device according to claim 2 taken in combination with any one of claims 3 to 9, **characterised in that** the female coupling unit (20) is fitted such as to rotate in a bore (24) in the fixed support (12) comprising an internal undercut (48) which permits release of the wedge (34B) in the predetermined angular position of the control knob (14) relative to the fixed support (12).

11. Device according to any one of claims 4 to 9 taken in combination with claim 10, **characterised in that** the wedge (34B) is connected to the remainder of the ring (34) by a joining part (J), which, when the control knob (14) is not in its predetermined angular position, is designed to co-operate with the surface which delimits the bore (24) in the fixed support (12), in order to prevent release of the wedge (34B) from the wedging hole (44) provided in the male coupling unit (18).

12. Anti-theft device for a motor vehicle, **characterised in that** it comprises a control device according to any one of claims 1 to 11, the control knob (14) forming a manual control unit for starting a vehicle engine and locking a steering column of the vehicle.

13. Anti-theft device according to claim 12, comprising a control device according to claim 2, **characterised in that** the control rod (16) is designed to activate a commutator with several positions, the predetermined angular position of the control knob (14) corresponding to an extreme angular position of this knob known as the "stop" position.
